# EUROPEAN PATENT SPECIFICATION

(11) **EP 4 514 490 B1**
(45) Date of publication and mention of the grant of the patent: **04.03.2026**
(21) Application number: 23725529.4
(22) Date of filing: 27.04.2023
(51) Int. Cl.: A63G 31/00

(54) **SYSTEMS AND METHODS FOR USING NON-FUNGIBLE TOKENS IN AN AMUSEMENT PARK ENVIRONMENT**
SYSTEME UND VERFAHREN ZUR VERWENDUNG VON NICHTFUNGIBLEN TOKEN IN EINER FREIZEITPARKUMGEBUNG
SYSTÈMES ET PROCÉDÉS D'UTILISATION DE JETONS NON FONGIBLES DANS ENVIRONNEMENT DE PARC D'ATTRACTIONS

(30) Priority: 28.04.2022 US 202263336114 P; 25.04.2023 US 202318139222
(43) Date of publication of application: 05.03.2025
(73) Proprietor: Universal City Studios LLC, Universal City, CA 91608 (US)
(72) Inventor: JORDAN, Robert, Michael, Orlando, Florida 32819 (US); MALL, Howard, Bruce, Orlando, Florida 32819 (US); MELO, Anthony, Orlando, Florida 32819 (US); LUGO, Victor, Alexander, Orlando, Florida 32819 (US)
(74) Representative: Keltie LLP
(86) International application number: PCT/US2023/020222
(87) International publication number: WO 2023/212210

(56) References cited:
- US-A1- 2005 108 912
- US-A1- 2018 290 064
- US-A1- 2021 055 793
- US-A1- 2021 072 888

## Description

### BACKGROUND

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Amusement parks include various entertainment attractions. Some entertainment attractions may provide an interactive environment for guests. For example, the guests may view an animated character within the interactive environment, and the guests may provide inputs that cause the animated character to move in a particular manner within the interactive environment. Furthermore, some entertainment attractions may enable the guests to participate in special experiences (e.g., dining experiences) and/or to purchase interactive souvenirs (e.g., electronic toys or other portable objects).

US 2018/290064 A1 describes a portable toy carried by a visitor of an amusement facility that has a first antenna, a first transceiver that executes near field communication with a communication terminal installed in the amusement facility through the first antenna, a second antenna, a second transceiver that executes far field communication with a mobile terminal carried by the visitor through the second antenna, a memory that is connected to at least one of the first and the second transceivers, and a controller that stores information on the visitor received from the mobile terminal by the second transceiver through the second antenna, in the memory.

### BRIEF DESCRIPTION

Certain embodiments commensurate in scope with the originally claimed subject matter are discussed below. These embodiments are not intended to limit the scope of the disclosure. Indeed, the present disclosure may encompass a variety of forms that may be similar to or different from the embodiments set forth below.

In an embodiment, an interactive system for an amusement park includes one or more processors and memory storing instructions executable by the one or more processors to cause the one or more processors to identify one or more non-fungible tokens (NFTs) possessed by a user and to provide control signals to one or more output devices of a portable object based on the one or more NFTs. The one or more output devices include an actuator configured to drive movement of at least a portion of the portable object, a speaker configured to output sounds, a light emitter configured to emit light, or any combination thereof.

In an embodiment, a method of operating an interactive system for an amusement park includes identifying, using one or more processors, one or more non-fungible tokens (NFTs) possessed by a user. The method also includes providing, using the one or more processors, control signals to one or more output devices of a portable object based on the one or more NFTs. In the method, providing the control signals to the one or more output devices includes providing the control signals to an actuator to drive movement of at least a portion of the portable object, providing the control signals to a speaker to output sounds, providing the control signals to a light emitter to emit light, or any combination thereof

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is schematic diagram of an interactive system that includes a portable object that is configured to operate based on non-fungible tokens (NFTs) possessed by a user, in accordance with an aspect of the present disclosure;
FIG. 2 illustrates the user carrying out a variety of actions via the interactive system of FIG. 1, in accordance with an aspect of the present disclosure;
FIG. 3 illustrates a graphical user interface (GUI) on a display screen of a user device, wherein the GUI presents a library of NFTs that may be used by the interactive system of FIG. 1, in accordance with an aspect of the present disclosure;
FIG. 4 illustrates an amusement park attraction that may be part of the interactive system of FIG. 1, in accordance with an aspect of the present disclosure; and
FIG. 5 is a block diagram of a method of operating the interactive system of FIG. 1, in accordance with an aspect of the present disclosure.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. One or more specific embodiments of the present embodiments described herein will be described below. In an effort to provide a concise description of these embodiments, all features of an actual implementation may not be described in the specification. It should be noted that in the development of any such actual implementation, as in any engineering or design project, numerous implementation-specific decisions must be made to achieve the developers' specific goals, such as compliance with system-related and business-related constraints, which may vary from one implementation to another. Moreover, it should be noted that such a development effort might be complex and time consuming, but would nevertheless be a routine undertaking of design, fabrication, and manufacture for those of ordinary skill having the benefit of this disclosure.

Present embodiments relate generally to systems and methods that utilize digital objects or tokens, such as non-fungible token (NFTs), to enhance experiences for users. An NFT is a unit of data that may be stored in a distributed ledger (e.g., blockchain). The NFT is unique and/or non-interchangeable, such that a unique identity and ownership can be confirmed (e.g., verified). This may impart a feeling of ownership over the NFT in a manner that is similar to a feeling of ownership over a physical object (e.g., physical photograph or a collectable toy). However, unlike the physical object, the NFT may not be lost, broken, and/or cumbersome to carry. Indeed, one or more NFTs (e.g., any number of NFTs, such as 1, 2, 3, 4, 5, more than 10, more than 100) may be stored in the distributed ledger and accessible from a digital wallet of the user. The NFT may also have other advantages (e.g., as compared to the physical object), such as that the NFT may also be easily transferred to other users (e.g., via a digital marketplace; without meeting in person).

As discussed herein, the NFT may be used in conjunction with multiple different physical objects. For example, the NFT may encompass digital data that encodes a motion profile, a voice profile, and/or a digital artwork (e.g., NFT image; skins or other accessories). Indeed, the NFT may encompass a data payload in the form of a specific code or algorithm. In some cases, the data payload may be unique to the NFT and/or may be included during minting of the NFT (e.g., based on an input from the user). The NFT may be used to control and/or modify the multiple different physical objects associated with the user (e.g., carried by the user; in a vicinity of the user; synced to a mobile device of the user; linked to the digital wallet of the user). Additionally or alternatively, the NFT may be used to control and/or modify various other experiences of the user as the user visits an interactive environment. Thus, a particular show performed by the physical objects and/or in the interactive environment may be achievable (e.g., only achievable) by accessing the data payload of the NFT.

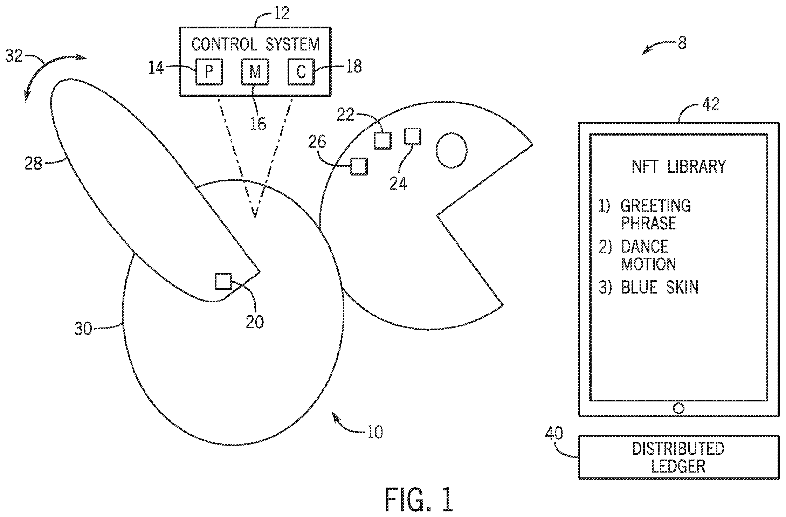

FIG. 1 illustrates an embodiment of a portable object 10 (e.g., toy, wand, band, blaster) that may be used as part of an interactive system 8. As shown, the portable object 10 includes a computing system 12 (e.g., an electronic computing system; a portable object computing system) that includes a processor 14, a memory device 16, and a communication device 18. The portable object 10 may also include an actuator 20, a light emitter 22, a speaker 24, and/or an input device 26 (e.g., a microphone for voice inputs, a push button for manual inputs). In operation, the processor 14 may instruct the actuator 20 to drive movement of one portion 28 (e.g., a wing) of the portable object 10 relative to another portion 30 (e.g., a body) of the portable object 10, such as indicated by arrow 32. It should be appreciated that the portable object 10 may include any number of actuators to drive movement of any number of portions of the portable object 10 (e.g., limbs, lips, eyes). Additionally or alternatively, the processor 14 may instruct the light emitter 22 to emit light and the speaker 24 to emit sounds. Furthermore, the processor 14 may receive inputs via the input device 26, such as inputs that cause the processor 14 to instruct the actuator 20, the light emitter 22, and/or the speaker 24 to provide respective outputs. It should be appreciated that the portable object 10 may include any number of light emitters, speakers, and/or input devices. In an embodiment, the portable object 10 is not a mobile phone or a tablet and/or has a complex three-dimensional shape (e.g., is not flat). In an embodiment, the portable object 10 lacks a display screen (e.g., does not display text and/or images). However, it should be appreciated that the portable object 10 may have any of a variety of processing/communication capabilities, any of a variety of shapes, and/or include the display screen.

The portable object 10 may be configured to access and/or receive one or more NFTs possessed by a user. For example, the one or more NFTs may be stored in a distributed ledger 40 (e.g., blockchain) and may be accessible via a digital wallet of the user. In an embodiment, the portable object 10 is configured to communicate with another device, such as a user device 42 (e.g., mobile phone), that has access to the digital wallet of the user. For example, an application (e.g., software application) on the user device 42 may include the digital wallet of the user 50. Then, the computing system 12 may communicate (e.g., over a network, such as a wireless network) with the user device 42 to access the digital wallet and to identify the one or more NFTs in the digital wallet. In an embodiment, the user device 42 may store an address of the digital wallet, and then, the computing system 12 may receive and utilize the address to access the digital wallet and to identify the one or more NFTs in the digital wallet. In an embodiment, the user may provide inputs via the user device 42 to transfer the one or more NFTs to the portable object 10 (e.g., select NFTs of the one or more NFTs).

Once the portable object 10 receives the one or more NFTs, the portable object 10 may use the one or more NFTs to create a personalized and/or unique version of the portable object 10. For example, the portable object 10 may store (e.g., in the memory device 16) and/or operate according to the one or more NFTs possessed by the user. However, other portable objects may store and/or operate according to other NFTs possessed by other users. It should be appreciated that one or more additional portable objects associated with the user may also store (e.g., in their respective memory devices) and/or operate according to the one or more NFTs possessed by the user. In some cases, certain features may be implemented to encourage and/or facilitate uniqueness even among the one or more additional portable objects associated with the user. For example, the select NFTs transferred to the portable object 10 may be temporarily and/or permanently unavailable for transfer from a library of NFTs to the one or more additional portable objects associated with the user.

In any case, the interactive system 8 may enable the user to collect the one or more NFTs and use the one or more NFTs to create the personalized, unique version of the portable object 10. The user may enjoy using the one or more NFTs to control the operations and behavior of the portable object 10. The user may also enjoy using the one or more NFTs to change the operations and behavior of the portable object 10 over time (e.g., by collecting and/or transferring new NFTs), as this may provide a more varied experience for the user. Additionally, the user may also enjoy using the one or more NFTs with multiple different portable objects (e.g., the portable object 10 and the one or more additional portable objects). For example, the user may want to use the one or more NFTs during play with the portable object 10 that has a form of a winged creature over a first time period, and then use the one or more NFTs during play with one of the one or more additional portable objects that has a different form of a blaster over a second period of time. The one or more NFTs may also enable the user to continue to experience interactive effects that correspond to the one or more NFTs even if the portable object 10 is lost or broken (e.g., by using the one or more NFTs with the one or more additional portable objects).

The one or more NFTs may encode or cause any of a variety of outputs at the portable object 10. That is, the NFT may encode or include a data payload in the form of a specific code or algorithm. In some embodiments, the data payload may be unique to the NFT. For example, the one or more NFTs may include a green skin accessory NFT that causes the processor 14 to instruct the light emitter 22 to emit green light, a voice profile NFT that causes the processor 14 to instruct the speaker 24 to output a phrase in accordance with the voice profile NFT, and/or a motion profile NFT that causes the processor to instruct the actuator 20 to move the portion 28 relative to the portion 30 in accordance with the motion profile NFT. It should be appreciated that the voice profile NFT may cause the processor 14 to instruct the speaker 24 to output the phrase that matches the phrase encoded in the voice profile NFT and/or with certain voice characteristics, such as pitch, tone, volume, pace, and the like encoded in the voice profile NFT. Similarly, the motion profile NFT may cause the processor 14 to instruct the actuator 20 to drive portions of the portable object 10 to move in a manner that matches a gesture or a sequence of gestures encoded in the motion profile NFT. In this way, a particular show (e.g., a unique show) may be performed by the portable object 10 upon accessing the data payload of the NFT (e.g., only after accessing the data payload of the NFT).

Furthermore, the processor may enact or follow multiple NFTs at the same time, so as to provide an effect of the portable object 10 providing sounds and movements in simultaneously. Indeed, it should be appreciated that at least some NFTs may include multiple types of profiles (e.g., voice, motion, and/or accessory). For example, at least some NFTs may include both voice and motion profiles to cause both sounds and movement of the portable object 10 in a coordinated manner at the same time (e.g., hand gestures and/or lip movement while speaking phrases). As another example, at least some NFTs may include digital artwork accompanied by both voice and motion profiles to cause the portable object 10 to illuminate and/or change its form/shape (e.g., via the actuator 20), as well as provide both sounds and movement of the portable object 10 in a coordinated manner at the same time (e.g., to cause the portable object 10 to represent the digital artwork of a red winged creature, and to enable the portable object 10 to speak and move in a particular way). It should also be appreciated that the processor 14 may be configured to carry out more complex processing, such as receiving voice inputs via the input device 26, selecting an appropriate voice profile NFT from multiple different voice profile NFTs based on the voice inputs, and instructing the speaker 24 to output an appropriate response phrase in accordance with the appropriate voice profile NFT. This may provide an effect of the portable object 10 carrying on a conversation with the user, for example.

The portable object 10 may include a power source, such as a battery, that provides power to the computing system 12 and its components, the actuator 20, the light emitter 22, the speaker 24, and so on. In an embodiment, the portable object 10 may be configured to communicate with the user device 42 to receive the one or more NFTs when brought within a proximity (e.g., range) of the user device 42. For example, the portable object 10 and the user device 42 may be configured to communicate via near field communication (NFC) or any other suitable type of communication. Then, when the portable object 10 is held within the proximity of the user device 42, the portable object 10 will sync with the user device 42 to access the digital wallet and/or the address of the digital wallet from the user device 42. In an embodiment, the portable object 10 may retain and use the one or more NFTs for a period of time (e.g., 10 minutes, 1 hour, 24 hours, or more). In an embodiment, the portable object 10 may retain and use the one or more NFTs until the portable object 10 receives an instruction to remove and/or stop use of the one or more NFTs (e.g., upon communicating with another device at an exit of an amusement park attraction; upon syncing with another user device; upon receipt of an input via the input device 26). This may enable the portable object 10 to be used with multiple different users over time (e.g., with the one or more NFTs of a first user as the first user carries the portable object 10 through the amusement park attraction, then with the one or more NFTs of a second user as the second user carries the portable object 10 through the amusement park attraction, and so on).

The processor 14 may include a microprocessor, which may execute software to generate effects based on the one or more NFTs. The processor 14 may include multiple microprocessors, one or more "general-purpose" microprocessors, one or more special-purpose microprocessors, and/or one or more application specific integrated circuits (ASICs), or some combination thereof. For example, the processor 14 may include one or more reduced instruction set computer (RISC) processors. The memory device 16 may include volatile memory, such as random access memory (RAM), and/or nonvolatile memory, such as read-only memory (ROM). The memory device 16 may store information, such as control software, the one or more NFTs, configuration data, communication protocols, or the like.

For example, the memory device 16 may store processor-executable instructions including firmware or software for the processor 14 to execute, such as instructions for controlling features of the portable object 10. In an embodiment, the memory device 16 is a tangible, non-transitory, machine-readable media that may store machine-readable instructions for the processor 14 to execute. The memory device 16 may include ROM, flash memory, hard drives, any other suitable optical, magnetic, or solid-state storage media, or a combination thereof. The communication device 18 may facilitate communication (e.g., wireless communication) with other components, such as the distributed ledger 40 and/or the user device 42.

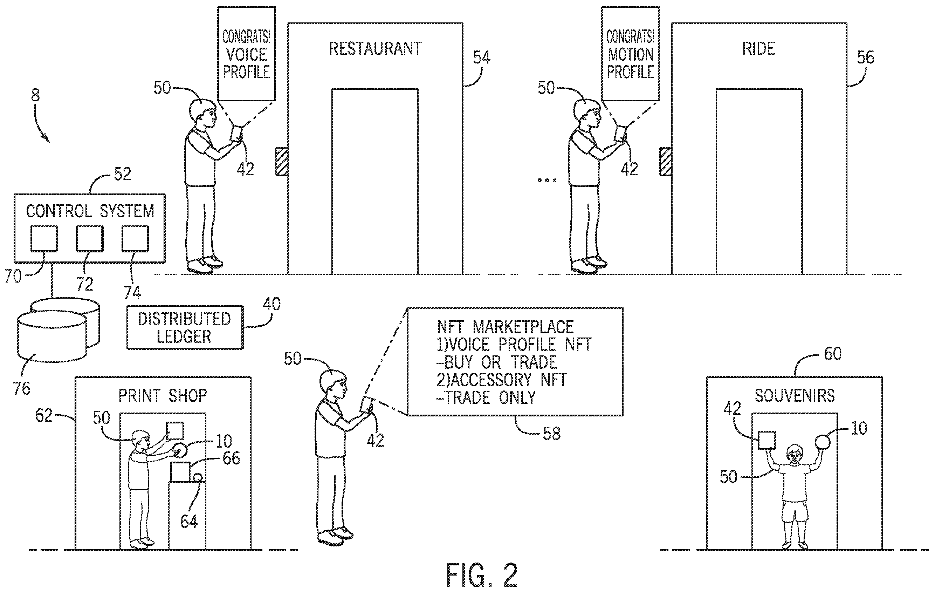

FIG. 2 illustrates an example of a user 50 carrying out a variety of actions via the interactive system 8, in accordance with an embodiment of the present disclosure. In particular, the various activities include collecting NFTs at different locations, transferring NFTs via an NFT marketplace 58, obtaining the portable object 10, and printing accessories for the portable object 10 based on NFTs. As shown, the user 50 may travel to various locations (e.g., physical locations) to collect the NFTs. In an embodiment, the user 50 may use the user device 42 to view a map that shows the various locations and/or details about the NFTs that are available at each of the various locations. Then, when the user 50 reaches a particular one of the various locations, the user 50 may use the user device 42 to scan a scannable code (e.g., bar code) and/or otherwise log their presence at the particular one of the various locations (e.g., via a global positioning monitoring system; via communication between a radiofrequency identification [RFID] tag and a reader) to enable a control system 52 to grant one or more NFTs to the user 50. For example, the map may guide the user 50 to a first location 54 (e.g., a restaurant), and the user 50 may be granted ownership of an NFT of a voice profile by scanning the scannable code on a wall of the first location 54, on a receipt and/or a container for a food item purchased at the first location 54, or the like. Similarly, the map may guide the user 50 to a second location 56 (e.g., a ride attraction), and the user 50 may be granted ownership of an NFT of a motion profile by scanning the scannable code on a wall of the second location 56 and/or via completing an interaction with a prop (e.g., a robotic figure) within the second location 56. The user 50 may obtain other NFTs (e.g., any number of other NFTs, such as 1, 2, 3, 4, 5, more than 10, more than 100) by visiting other locations, including other locations in an amusement park and/or outside of an amusement park; by completing other challenges, such as riding a rollercoaster in the amusement park and/or winning an interactive virtual competition outside of the amusement park; and/or by reaching certain achievements, such as spending more than a threshold amount on souvenirs in the amusement park.

The user 50 may also have access to the NFT marketplace 58. For example, the user 50 may decide that they would like to transfer the NFT of the voice profile to another user, and the user 50 may list the NFT of the voice profile on the NFT marketplace 58. The user 50 may also decide that they would like to obtain an NFT of an accessory so that they are able to use the NFT of the accessory with the portable object 10. As shown, the user 50 may access the NFT marketplace 58, such as via an application on the user device 42. The user 50 may provide a selection input at their user device 42 to buy the NFT of the accessory (e.g., for currency, such as digital and/or real currency) and/or to trade for the NFT of the voice profile.

As shown, the user 50 may also visit a third location 60 (e.g., souvenir shop; interactive attraction) to purchase or to otherwise obtain the portable object 10. In an embodiment, the user 50 may buy the portable object 10 (e.g., for currency, such as digital and/or real currency). In an embodiment, the user 50 may borrow or temporarily use the portable object 10, such as for a limited duration during a visit to the amusement park or during a pass through one of the attractions of the amusement park. Thus, the user 50 may acquire and possess one or more NFTs, which are stored in the distributed ledger 40 and are accessible via the digital wallet of the user 50. In this way, the user 50 may collect one or more NFTs at various locations, exchange NFTs via the NFT marketplace 58, and also obtain the portable object 10 that then operates in accordance with the NFTs possessed by the user 50.

In an embodiment, the one or more NFTs may include accessory NFTs, such as skins, tools, clothing items, images, or the like. Furthermore, the interactive system 8 may include a fourth location 62 (e.g., a print shop), which may be located in the amusement park or outside of the amusement park. In operation, the user 50 may travel to the fourth location 62 and make a request to print a physical accessory 64 (e.g., a three-dimensional object) that corresponds to a particular accessory NFT. For example, the user 50 may select the particular accessory NFT from their digital wallet (e.g., presented as an NFT library via an application on the user device 42) to make the request to print the physical accessory 64. The control system 52 may receive the request, such as via communication with the user device 42. Then, the control system 52 may send instructions to a printer 66 to print the physical accessory 64 that corresponds to the particular accessory NFT. For example, the physical accessory 64 may be a green reptile skin that corresponds to the accessory NFT or a red hat that corresponds to the accessory NFT. It should be appreciated that the request and the instructions to print the physical accessory 64 may be provided to the printer 66 via any suitable device and/or communication pathway.

The physical accessory 64 may be designed to be coupled to the portable object 10 (e.g., the green reptile skin is sized to wrap around the portable object 10) or to be coupled to the user 50 (e.g., the red hat is sized to be worn on a head of the user 50). In such cases, the request may include and/or the printer 66 may utilize information about the portable object 10 and/or the user 50 to customize the physical accessory 64. For example, the control system 52 may receive the accessory NFT and information that indicates a type and/or a size of the portable object 10 (e.g., a small winged creature, a large winged creature, a first type of wand, a second type of wand; via communication with the portable object 10 and/or via a user profile). Then, the control system 52 may instruct the printer 66 to print the physical accessory 64 with appropriate dimensions and features (e.g., a small size with two openings spaced apart to fit over the wings of the small winged creature, a large cylinder to wrap around an entirety of a handle of the second type of wand).

In an embodiment, aspects may be automated for efficient processing and throughput of multiple users. For example, in response to the control system 52 receiving an indication that the user 50 purchased or otherwise obtained the portable object 10 (e.g., via communication with the user device 42, which is synced to the portable object 10; via a point-of-sale device at the third location 60), the control system 52 may access the digital wallet of the user 50 to determine whether the user 50 possesses any NFTs that would be suitable to support printing of the physical accessory 64 for the portable object 10. Then, in response to determining that the user 50 possesses at least one NFT that would be suitable to support the printing, the control system 52 may instruct the printing of the physical accessory 64 for the portable object 10. Additionally or alternatively, the control system 52 may instruct display of a notification that the physical accessory 64 is available for printing upon request from the user and/or a map with a path to the fourth location 62 via the user device 42.

The control system 52 may employ and/or create more immersive, engaging experiences, such as by monitoring the one or more NFTs possessed by the user 50 and the portable objects possessed by the user 50, and then setting a challenge for the user 50 to complete to be eligible for the physical accessory 64. For example, the control system 52 may determine that the user 50 has the green skin accessory NFT and the small winged creature portable object. Then, the control system 52 may notify the user 50 that they will be eligible to have the green skin printed as the physical accessory 64 for the small winged creature portable object upon completion of an attraction (e.g., a rollercoaster). Furthermore, upon detecting the completion of the attraction (e.g., via communication with the user device 42 and/or the portable object 10 on a ride vehicle of the attraction and/or at the exit of the attraction; via sensors), the control system 52 may automatically initiate the printing of the physical accessory 64 and/or display of a notification that the physical accessory 64 is now available for printing upon request from the user.

The control system 52 includes a processor 70, a memory device 72, and a communication device 74. The processor 70 may include any of the features of the processor 14, the memory device 72 may include any of the features of the memory device 16, and the communication device 74 may include any of the features of the communication device 18. For example, the memory device 72 may store processor-executable instructions including firmware or software for the processor 70 to execute, such as instructions for processing data from sensors, identifying locations and completed actions, and/or controlling the printer 66. As shown, the control system 52 may include or be communicatively coupled to one or more database 76, which may store various types of data (e.g., the user profiles).

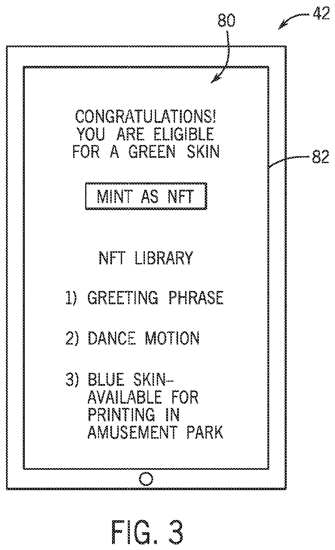

FIG. 3 illustrates an embodiment of a graphical user interface (GUI) 80 on a display screen 82 of the user device 42, wherein the GUI 80 presents an available NFT and a library of NFTs that may be used by the interactive system 8 of FIG. 1 to provide an immersive experience of the user. The GUI 80 may be presented on the display screen 82 of the user device 42 when the user scans into a location, such as the first location 54 of FIG. 2, for example. The GUI 80 may notify the user that the user is eligible for a particular NFT, and the GUI 80 may also include a selectable icon (e.g., "Mint as NFT") to enable the user to approve of the particular NFT and to mint the particular NFT. In an embodiment, the user may pay a fee to mint the particular NFT and/or the user may be allocated a limited number of NFTs per time period (e.g., 4 NFTs per day), and thus, the user may choose to decline or to mint the particular NFT. In any case, after the user selects the selectable icon to mint the particular NFT or the process to mint the particular NFT is otherwise completed, the particular NFT is stored on the distributed ledger and is available via the digital wallet of the user. Thereafter, the GUI 80 may present the particular NFT in the NFT library for the user. As noted herein, the NFT may encompass a data payload in the form of a specific code or algorithm. In some cases, the data payload may be included during minting of the NFT (e.g., based on an input from the user).

As shown, the GUI 80 includes the NFT library, which provides information about the NFTs that are in the digital wallet of the user. For example, the NFT library may list the NFTs, including a written description and/or an image representative of any voice profile NFTs, motion profile NFTs, and/or accessory NFTs possessed by the user. The NFT library may enable selection of one or more of the NFTs by the user. For example, the user may select one of the NFTs for transfer to the portable object. Then, the portable object may store and/or be capable of performing an action that corresponds to the transferred NFT. In an embodiment, the portable object may perform the action that corresponds to the transferred NFT upon receipt of the transferred NFT and/or upon receipt of an input (e.g., via the input device of the portable object; via instructions from the control system; according to a schedule/program stored on the portable object). It should be appreciated that the GUI 80 is merely exemplary, and the GUI 80 may omit certain information and/or include additional information. For example, the GUI 80 may provide an indication of that the user device 42 is synced to the portable object, a map to certain locations that have additional NFTs, and/or any other information disclosed herein.

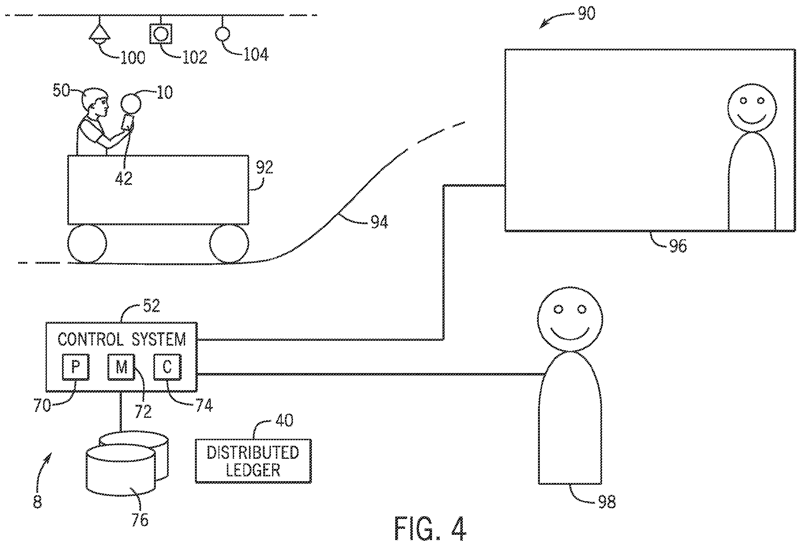

As discussed herein, the interactive system 8 may be utilized in an amusement park. FIG. 4 is schematic diagram of an embodiment of the interactive system 8 that utilizes NFTs within an amusement park attraction 90 (e.g., at the second location 56 of FIG. 2). As shown, the amusement park attraction 90 is a ride attraction that includes a ride vehicle 92 that is configured to carry one or more users, such as the user 50, along a path 94. However, it should be appreciated that the interactive system 8 may additionally or alternatively be implemented in any type of amusement park attraction, such as a walk-through attraction (e.g., without any ride vehicles), a conveyor attraction (e.g., with a conveyor to carry the one or more users) a motion simulator attraction (e.g., with a stationary ride vehicle to carry the one or more users), a recreational environment, a restaurant, a hotel, or the like.

The interactive system 8 includes the control system 52 with the processor 70, the memory device 72, and the communication device 74. The interactive system 8 also includes the one or more databases 76 that store data, one or more display screens 96 that display images (e.g., scenes), and/or one or more props 98 (e.g., three-dimensional animated characters, robotic figures, and/or show objects). The control system 52 may include or be communicatively coupled to the one or more databases 76, the one or more display screens 96, and/or the one or more props 98. The interactive system 8 may also include one or more lights 100 to provide lighting effects and/or one or more speakers 102 to provide sound effects. The control system 52 may be communicatively coupled to the one or more lights 100 and/or to the one or more speakers 102.

In an embodiment, one or more sensors 104 may collect sensor data and provide the sensor data to the control system 52. Then, the control system 52 may process the sensor data to identify respective user profiles (e.g., user accounts) associated with the one or more users (e.g., the user profile associated with the user 50). Each of the user profiles may include respective park visit history, transaction history, achievements and scores, an address for a digital wallet, and the like. As an example, with the user profile for the user 50, the control system 52 may utilize the address for the digital wallet to access the digital wallet and to identify that the user 50 possesses the one or more NFTs in the digital wallet and/or to add additional NFTs to the digital wallet (e.g., mint the NFTs as the user 50 travels through the amusement park attraction 90). In such cases, the one or more sensors 104 may be cameras, facial recognition cameras, motion characteristic sensors, identity sensors, microphones, or the like. The one or more sensors 104 may detect one or more identifying characteristics of the user 50, such as body temperature, gait, posture, facial structure, skeletal structure, speech, or the like. The one or more sensors 104 may be installed at various locations in the amusement park attraction 90.

Regardless of the techniques used to identify that the user 50 possesses the one or more NFTs, the interactive system 8 may use the one or more NFTs to provide entertainment to the user 50 while the user 50 is within the amusement park attraction 90. For example, the control system 52 may instruct the one or more display screens 96 to display an animated character that speaks, moves, and/or has an appearance based on the one or more NFTs of the user 50 as the user 50 travels through the amusement park attraction 90. Thus, the animated character may speak a phrase (e.g., a unique phrase, such as "Hello, my best friend Jane Smith") that corresponds to a voice profile NFT and may perform a gesture (e.g., a unique dance) that corresponds to a motion profile NFT. Similarly, the animated character may have one or more accessories (e.g., a green skin; visible accessories) that correspond to an accessory NFT.

Additionally or alternatively, the control system 52 may provide instructions to the one or more props 98 to speak, move, and/or change its appearance based on the one or more NFTs of the user 50 as the user 50 travels through the amusement park attraction 90. Thus, the one or more props 98 may speak the phrase that corresponds to the voice profile NFT and may perform the gesture that corresponds to the motion profile NFT. Similarly, the one or more props 98 may be modified to change appearance to include the one or more accessories that correspond to an accessory NFT. It should be appreciated that the animated character and the one or more props 98 may provide the same or different phrases, the same or different motions, and/or the same or different appearance based on any of the one or more NFTs of the user 50. For example, as the user 50 travels through the amusement park attraction 90, the animated character make a first gesture (e.g., the unique dance) based on a first NFT, and one of the props 98 may make a second gesture (e.g., a unique handshake) based on a second NFT, and so on. The control system 52 may also cause various other effects based on the one or more NFTs possessed by the one or more users. For example, the control system 52 may control the light 100, the speaker 102, and/or the display screen 96 to provide outputs based on the one or more NFTs (e.g., characteristics of the NFTs) possessed by the user 50. Thus, a particular show (e.g., unique show) performed in the amusement park attraction 90 upon accessing the data payload of the NFT (e.g., only after accessing the data payload of the NFT). In this way, the interactive system 8 may provide an immersive, dynamic experience to the one or more users.

As shown, the user 50 may carry the portable object 10 through the amusement park attraction 90. In such cases, both the in-attraction show effects (e.g., the display screen 96, the one or more props 98, the light 100, the speaker 102) and the portable object 10 may carry out actions in accordance with the one or more NFTs possessed by the user 50 (e.g., simultaneously and/or in a coordinated manner). For example, the portable object 10 may carry out an action that corresponds to the motion NFT (e.g., a unique dance) and communicate completion of the action to the control system 52 (or this may be detected by the control system 52, such as via analysis of images captured by the sensors 104). Then, the control system 52 may instruct one of the props 98 to carry out the action that corresponds to the motion NFT (e.g., repeat the unique dance). As another example, the portable object 10 and one of the props 98 may be controlled to carry out the action that corresponds to the motion NFT (e.g., a unique handshake) simultaneously to provide an effect of the portable object 10 and the one of the props 98 interacting with one another (e.g., greeting via the unique handshake).

The one or more NFTs may be used in other ways to provide an immersive, dynamic experience. For example, as the user 50 travels through the amusement park attraction 90, the user 50 may successfully complete an experience, such as a challenge, an interaction with the animated character shown on the display screen 96, and/or an interaction with the one or more props 98. For example, the user 50 may say a correct key word in a response to a question posed by the animated character. Then, the control system 52 may unlock and/or mint a new NFT for the user 50, such as a new voice profile NFT that corresponds to the spoken interaction (e.g., the question and the response). It should be appreciated that the new voice profile NFT may encode the words alone and/or voice characteristics (e.g., so that at least some of the words sounds as if they are spoken by the animated character when repeated by the portable object 10 upon transfer of the new voice profile NFT to the portable object 10). In an embodiment, the new voice profile NFT may encode a recording of the spoken interaction (e.g., captured via the sensor 104, which may be a microphone; so that the user 50 can replay the recording via the portable object 10 upon transfer of the new voice profile NFT to the portable object 10).

As another example, the user 50 may mimic one of the props 98 to successfully perform a dance gesture. Then, the control system 52 may unlock and/or mint a new NFT for the user, such as a new motion profile NFT that corresponds to the dance gesture. As another example, the user 50 may aim the portable object 10 to launch a virtual projectile from the portable object 10 to cause a virtual hit on a virtual target shown on the display screen 96. In response, the control system 52 may unlock and/or mint a new NFT for the user 50, such as a new accessory NFT that has a color and/or other characteristics (e.g., pattern, texture, type) that match the virtual target. In any case, the new NFT may be transferred to the portable object 10 to enable the portable object 10 to carry out the action based on the new NFT (e.g., the portable object 10 outputs the question and the response, performs the dance gesture, and/or lights up to reflect the color of the accessory NFT). As noted herein, the new accessory NFT may able be accessed and used to print a physical accessory that corresponds to the accessory NFT. For example, the physical accessory may be printed and/or otherwise made available to the user 50 upon completion of the amusement park attraction 90 (e.g., at or after an exit). Furthermore, as discussed herein, the NFTs may be considered combination NFTs that include a voice profile, a motion profile, and/or digital artwork. It should be appreciated that the portable object 10, the user device 42, and the control system 52 may communicate with one another as the user 50 travels through the amusement park attraction 90, which may enable access to and use of the one or more NFTs to control the show effects, minting and transfer of any new NFTs to the portable object 10 during this time, and so on.

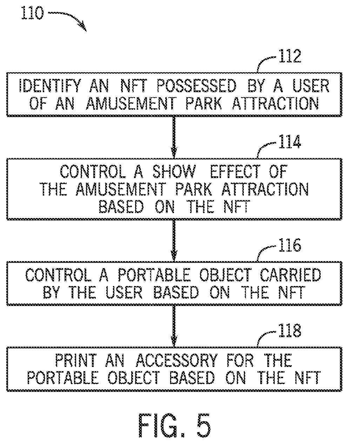

FIG. 5 is a block diagram of an embodiment of a method 110 for utilizing NFTs to provide an immersive experience. The method 110 includes various steps represented by blocks. It should be noted that the method 110 may be performed as an automated procedure by a system, such as the interactive system 8 of FIGS. 1, 2, and 4. Although the flow chart illustrates the steps in a certain sequence, it should be understood that the steps may be performed in any suitable order and certain steps may be carried out simultaneously, where appropriate. Further, certain steps or portions of the method 110 may be performed by separate systems or devices.

In block 112, the system may identify an NFT possessed by a user of an amusement park attraction. The NFT may be stored in a distributed ledger (e.g., blockchain) and is accessible via a digital wallet of the user. For example, an application (e.g., software application) on a user device (e.g., mobile phone) associated with the user may include the digital wallet of the user. As discussed herein, the system may utilize various techniques to identify the NFT possessed by the user of the amusement park attraction. For example, in some cases, the user may present a code (e.g., a quick response [QR] code, a bar code, an alphanumeric code) to a scanner (e.g., imager or camera) of the system to enable the system to retrieve the digital wallet of the user.

In block 114, the system may control a show effect (e.g., a scene and/or an animated character on a display screen, one or more props, a light, a sound) of an amusement park attraction based on the NFT. For example, when the user device is carried into the amusement park attraction, the system may communicate (e.g., over a network, such as a wireless network) with the user device to access the digital wallet and to identify that the user associated with the user device possesses the NFT. Then, the system may instruct an output device to provide the show effect in accordance with the NFT (e.g., cause the animated character to speak according to a voice profile NFT, cause the prop to move according to the motion profile NFT, and/or cause the light to illuminate in a color according to the accessory NFT).

In block 116, the system may control a portable object (e.g., toy) carried by the user based on the NFT. For example, when the portable object is brought within proximity of the user device, the portable object may communicate (e.g., sync; over a network, such as a wireless network) with the user device to access the digital wallet and to identify that the user associated with the user device possesses the NFT. Then, the system may instruct an output device of the portable object to provide an output in accordance with the NFT (e.g., cause a speaker of the portable object to emit sounds according to a voice profile NFT, cause an actuator of the portable object to move according to the motion profile NFT, and/or cause a light of the portable object to illuminate in a color according to the accessory NFT).

In block 118, the system may print or otherwise form or make available a physical accessory based on the NFT. The physical accessory may be designed to be coupled to the portable object, such as a skin that is sized to wrap around the portable object. In an embodiment, the physical accessory may be designed to be worn or carried by the user, such as a hat that matches the NFT and is designed to be worn by the user. It should be appreciated that the method 110 may include any other features disclosed herein, including guiding the user to locations to collect new NFTs and the like.

The interactive system disclosed herein may be configured to facilitate any of a variety of immersive experiences. For example, the amusement park or other entertainment venue may provide a unique (e.g., one-of-a-kind) experience, such as a unique dining experience (e.g., "chef's table" experience) during which a restaurant/chef generates a unique menu (e.g., a list of courses, ingredients for the user. The interactive system may mint the unique menu as an NFT for the user (e.g., automatically at some time, such as upon completion of the meal; upon confirmation by the user). Then, upon visiting the restaurant at a later time, the user may present the NFT for the restaurant/chef to provide the meal in accordance with the unique menu. Furthermore, the user may sell or trade the NFT on the NFT marketplace. In this way, the user may find more value and/or entertainment in reserving the "chef's table" experience because the user has a digital token to memorialize the unique menu, can choose to have the unique menu again at a later time, and/or can share (e.g., sell or trade) the unique menu via the marketplace.

As another example, the interactive system may include a performance, such as an unmanned aerial vehicle (e.g., drone) show, firework show, parade, and/or play. In an embodiment, the interactive system may select one or more users (e.g., from many users, such as from all of the users in the amusement park) and use the NFTs of the one or more users to control at least some aspects of the performance. The interactive system may select the one or more users based on any of a variety of factors, such as special occasions (e.g., it is their birthday), a number of attractions visited in the amusement park over a time period (e.g., a prior day, a current day), a number of points earned via interactions in one or more of the attractions in the amusement park, or the like. The interactive system may select the one or more users randomly (e.g., using a random selection generator).

In any case, once selected, the interactive system may access the respective digital wallet of each of the one or more users and then use the NFTs (e.g., the data payloads of the NFTs) therein to control the performance. In an embodiment, the interactive system may provide a notification to the one or more users (e.g., via their respective user devices) to enable the one or more users to opt-in to participate in the performance and/or to select certain NFTs to be used for the performance. As an example, the interactive system may control the unmanned aerial vehicles to illuminate in a green color to correspond to a green accessory NFT and/or to emit sounds that correspond to the voice profile NFT as the unmanned aerial vehicles move in a coordinated manner to provide the performance (e.g., visible to the many users, such as all of the users in the amusement park). Additionally or alternatively, the interactive system may control the unmanned aerial vehicles to fly in a formation that generates a shape that corresponds to a dragon NFT during the performance. In this way, the interactive system may encourage users to participate in certain activities in the amusement park (e.g., to visit the attractions to have a higher chance of being selected for the performance; to attend the performance), as well as provide additional entertainment as the users wait for the performance. Furthermore, the use of the NFTs as part of the performance may increase the value of the NFTs (e.g., the NFTs used in the performance may be viewed as more valuable) and/or may encourage activity via the NFT marketplace (e.g., if selected, the user may visit the NFT marketplace to obtain NFTs that the user would like to use in the performance). Similar effects may be provided via fireworks (e.g., firework colors and/or sounds played during the performance based on the NFTs), as well as parades and plays (e.g., costumes worn by performers, sounds played during the performance, phrases spoken by the performers, and/or gestures made by the performers based on the NFTs).

Advantageously, the present embodiments store data as NFTs, which are unique and verifiable. It should be appreciated that the control system may employ and utilize stored data that is not stored as NFTs, such as an image, a motion profile, and/or a sound profile stored in association with a user in a storage device of a computing system in the amusement park, a cloud computing system, a remote computing system, a portable object, or any other suitable device or system (e.g., in a look-up table). For example, the user may obtain access to an image by scanning a code at a location in the amusement park, and the image may be added to the user profile. Then, upon scanning a unique identifier or otherwise identifying themselves within the amusement park attraction, a control system may determine that the user has obtained the image (or otherwise possesses or is associated with the image). Indeed, any of the examples and embodiments disclosed herein with reference to NFTs may be used for any other images, motion profiles, and/or sound profiles (e.g., non-NFTs).

It should be appreciated that any features shown or described with reference to FIGS. 1-5 may be combined in any suitable manner. Furthermore, the portable toy may have any of the features of the user device (e.g., the portable toy may be configured to carry out operations described herein as being performed by the user device, such as storing the address of the digital wall and/or presenting the NFT library for selection by the user). While only certain features of the present disclosure have been illustrated and described herein, many modifications and changes will occur to those skilled in the art. The scope of the invention is defined by the appended claims.

## Claims

1. An interactive system for an amusement park, comprising:
one or more processors (14); and
memory (16) storing instructions executable by the one or more processors to cause the one or more processors to:
identify one or more non-fungible tokens (NFTs) possessed by a user; and
provide control signals to one or more output devices of a portable object (10) based on the one or more NFTs, wherein the one or more output devices comprise an actuator (20) configured to drive movement of at least a portion of the portable object, a speaker (24) configured to output sounds, a light emitter (22) configured to emit light, or any combination thereof.

2. The interactive system of claim **1,** wherein the instructions are executable by the one or more processors to cause the one or more processors to identify the one or more NFTs possessed by the user via communication with a user device carried by the user.

3. The interactive system of claim **1,** wherein the portable object (10) is a portable toy configured to be carried by the user.

4. The interactive system of claim **1,** wherein the instructions are executable by the one or more processors to cause the one or more processors to provide the control signals to the actuator (20) to drive the movement of at least the portion of the portable object (10) based on the one or more NFTs.

5. The interactive system of claim **1,** wherein the instructions are executable by the one or more processors to cause the one or more processors to provide the control signals to the speaker (24) to output the sounds based on the one or more NFTs.

6. The interactive system of claim **1,** wherein the instructions are executable by the one or more processors to cause the one or more processors to provide the control signals to the light emitter (22) to emit the light based on the one or more NFTs.

7. The interactive system of claim 1, wherein the instructions are executable by the one or more processors to cause the one or more processors to instruct a printer to print a physical accessory for the portable object (10) based on the one or more NFTs.

8. The interactive system of claim 1, wherein the instructions are executable by the one or more processors to cause the one or more processors to output a notification to a user device carried by the user to guide the user to travel to a location to obtain at least one additional NFT.

9. The interactive system of claim 1, wherein the instructions are executable by the one or more processors to cause the one or more processors to provide control signals to an attraction light emitter, an attraction speaker, or both within an amusement park attraction based on the one or more NFTs.

10. The interactive system of claim 1, wherein the instructions are executable by the one or more processors to cause the one or more processors to select the user from a plurality of users based on respective accomplishments of the plurality of users prior to identifying the one or more NFTs possessed by the user, and optionally wherein the portable object (10) comprises an unmanned aerial vehicle.

11. The interactive system of claim 1, wherein the instructions are executable by the one or more processors to cause the one or more processors to sync the portable object (10) to a user device of the user upon the portable object (10) being within a range of the user device to thereby identify the one or more NFTs possessed by the user.

12. The interactive system of claim 1, wherein the instructions are executable by the one or more processors to cause the one or more processors to provide an NFT marketplace to facilitate transfer of the one or more NFTs to another user.

13. The interactive system of claim 1, wherein the instructions are executable by the one or more processors to cause the one or more processors to:
identify that a user has completed an experience;
in response to identifying completion of the experience, mint the experience as one of the one or more NFTs for the user; and
provide control signals to the one or more output devices of the portable object (10) based on the minted NFT.

14. The interactive system of claim 13, wherein the instructions are executable by the one or more processors to cause the one or more processors to identify that the user has completed the experience upon detection of a verbal interaction between the user and an element in an amusement park attraction, a gesture performed in the amusement park attraction, or a targeting interaction in the amusement park attraction.

15. A method of operating an interactive system for an amusement park, the method comprising:
identifying, using one or more processors, one or more non-fungible tokens (NFTs) possessed by a user; and
providing, using the one or more processors, control signals to one or more output devices of a portable object based on the one or more NFTs, wherein providing the control signals to the one or more output devices comprises:
providing the control signals to an actuator to drive movement of at least a portion of the portable object;
providing the control signals to a speaker to output sounds;
providing the control signals to a light emitter to emit light; or
any combination thereof.

## Patentansprüche

1. Interaktives System für einen Vergnügungspark, umfassend:
einen oder mehrere Prozessoren (14); und
einen Speicher (16), der Anweisungen speichert, die von dem einen oder den mehreren Prozessoren ausführbar sind, um den einen oder die mehreren Prozessoren zu veranlassen zum:
Identifizieren eines oder mehrerer Non-Fungible Tokens (NFTs), die ein Benutzer besitzt; und
Bereitstellen von Steuersignalen an eine oder mehrere Ausgabevorrichtungen eines tragbaren Objekts (10) basierend auf dem einen oder den mehreren NFTs, wobei die eine oder die mehreren Ausgabevorrichtungen einen Aktuator (20), der konfiguriert ist, um eine Bewegung mindestens eines Teils des tragbaren Objekts anzutreiben, einen Lautsprecher (24), der konfiguriert ist, um Töne auszugeben, einen Lichtemitter (22), der konfiguriert ist, um Licht zu emittieren, oder eine beliebige Kombination davon umfassen.

2. Interaktives System nach Anspruch 1, wobei die Anweisungen von dem einen oder den mehreren Prozessoren ausführbar sind, um den einen oder die mehreren Prozessoren zu veranlassen, das eine oder die mehreren NFTs, die der Benutzer besitzt, über Kommunikation mit einer von dem Benutzer mitgeführten Benutzervorrichtung zu identifizieren.

3. Interaktives System nach Anspruch 1, wobei das tragbare Objekt (10) ein tragbares Spielzeug ist, das konfiguriert ist, um von dem Benutzer mitgeführt zu werden.

4. Interaktives System nach Anspruch 1, wobei die Anweisungen von dem einen oder den mehreren Prozessoren ausführbar sind, um den einen oder die mehreren Prozessoren zu veranlassen, die Steuersignale an den Aktuator (20) bereitzustellen, um die Bewegung mindestens des Teils des tragbaren Objekts (10) basierend auf dem einen oder den mehreren NFTs anzutreiben.

5. Interaktives System nach Anspruch 1, wobei die Anweisungen von dem einen oder den mehreren Prozessoren ausführbar sind, um den einen oder die mehreren Prozessoren zu veranlassen, die Steuersignale an den Lautsprecher (24) bereitzustellen, um die Töne basierend auf dem einen oder den mehreren NFTs auszugeben.

6. Interaktives System nach Anspruch 1, wobei die Anweisungen von dem einen oder den mehreren Prozessoren ausführbar sind, um den einen oder die mehreren Prozessoren zu veranlassen, die Steuersignale an den Lichtemitter (22) bereitzustellen, um das Licht basierend auf dem einen oder mehreren NFTs zu emittieren.

7. Interaktives System nach Anspruch 1, wobei die Anweisungen von dem einen oder den mehreren Prozessoren ausführbar sind, um den einen oder die mehreren Prozessoren zu veranlassen, einen Drucker anzuweisen, ein physisches Zubehör für das tragbare Objekt (10) basierend auf dem einen oder den mehreren NFTs zu drucken.

8. Interaktives System nach Anspruch 1, wobei die Anweisungen von dem einen oder den mehreren Prozessoren ausführbar sind, um den einen oder die mehreren Prozessoren zu veranlassen, eine Benachrichtigung an eine von dem Benutzer mitgeführte Benutzervorrichtung auszugeben, um den Benutzer anzuleiten, sich zu einer Stelle zu bewegen, um mindestens ein zusätzliches NFT zu erhalten.

9. Interaktives System nach Anspruch 1, wobei die Anweisungen von dem einen oder den mehreren Prozessoren ausführbar sind, um den einen oder die mehreren Prozessoren zu veranlassen, Steuersignale an einen Attraktionslichtemitter, einen Attraktionslautsprecher oder beide innerhalb einer Vergnügungsparkattraktion basierend auf dem einen oder den mehreren NFTs bereitzustellen.

10. Interaktives System nach Anspruch 1, wobei die Anweisungen von dem einen oder den mehreren Prozessoren ausführbar sind, um den einen oder die mehreren Prozessoren zu veranlassen, den Benutzer aus einer Vielzahl von Benutzern basierend auf jeweiligen Errungenschaften der Vielzahl von Benutzern vor dem Identifizieren des einen oder der mehreren NFTs, die der Benutzer besitzt, auszuwählen, und wobei das tragbare Objekt (10) optional ein unbemanntes Luftfahrzeug umfasst.

11. Interaktives System nach Anspruch 1, wobei die Anweisungen von dem einen oder den mehreren Prozessoren ausführbar sind, um den einen oder die mehreren Prozessoren zu veranlassen, das tragbare Objekt (10) mit einer Benutzervorrichtung des Benutzers zu synchronisieren, sobald sich das tragbare Objekt (10) innerhalb einer Reichweite der Benutzervorrichtung befindet, um dadurch das eine oder die mehreren NFTs, die der Benutzer besitzt, zu identifizieren.

12. Interaktives System nach Anspruch 1, wobei die Anweisungen von dem einen oder den mehreren Prozessoren ausführbar sind, um den einen oder die mehreren Prozessoren zu veranlassen, einen NFT-Marktplatz bereitzustellen, um einen Transfer des einen oder der mehreren NFTs an einen anderen Benutzer zu ermöglichen.

13. Interaktives System nach Anspruch 1, wobei die Anweisungen von dem einen oder den mehreren Prozessoren ausführbar sind, um den einen oder die mehreren Prozessoren zu veranlassen zum:
Identifizieren, dass ein Benutzer ein Erlebnis abgeschlossen hat;
als Reaktion auf das Identifizieren eines Abschlusses des Erlebnisses, Prägen des Erlebnisses als eines des einen oder der mehreren NFTs für den Benutzer; und
Bereitstellen von Steuersignalen an die eine oder die mehreren Ausgabevorrichtungen des tragbaren Objekts (10) basierend auf dem geprägten NFT.

14. Interaktives System nach Anspruch 13, wobei die Anweisungen von dem einen oder den mehreren Prozessoren ausführbar sind, um den einen oder die mehreren Prozessoren zu veranlassen, zu identifizieren, dass der Benutzer das Erlebnis abgeschlossen hat, bei einer Erkennung einer verbalen Interaktion zwischen dem Benutzer und einem Element in einer Vergnügungsparkattraktion, einer in der Vergnügungsparkattraktion durchgeführten Geste oder einer Zielinteraktion in der Vergnügungsparkattraktion.

15. Verfahren zum Bedienen eines interaktiven Systems für einen Vergnügungspark, das Verfahren umfassend:
Identifizieren, unter Verwendung eines oder mehrerer Prozessoren, eines oder mehrerer Non-Fungible Token (NFTs), die ein Benutzer besitzt; und
Bereitstellen, unter Verwendung des einen oder der mehreren Prozessoren, von Steuersignalen an eine oder mehrere Ausgabevorrichtungen eines tragbaren Objekts basierend auf dem einen oder den mehreren NFTs, wobei das Bereitstellen der Steuersignale an die eine oder die mehreren Ausgabevorrichtungen umfasst:
Bereitstellen der Steuersignale an einen Aktuator, um eine Bewegung mindestens eines Teils des tragbaren Objekts anzutreiben;
Bereitstellen der Steuersignale an einen Lautsprecher, um Töne auszugeben;
Bereitstellen der Steuersignale an einen Lichtemitter, um Licht zu emittieren; oder
eine beliebige Kombination davon.

## Revendications

1. Système interactif pour un parc d'attractions, comprenant :
un ou plusieurs processeurs (14) ; et
une mémoire (16) stockant des instructions exécutables par le ou les processeurs pour amener le ou les processeurs à :
identifier un ou plusieurs jetons non fongibles (NFT) que possède un utilisateur ; et
fournir des signaux de commande à un ou plusieurs dispositifs de sortie d'un objet portable (10) en fonction du ou des NFT, dans lequel le ou les dispositifs de sortie comprennent un actionneur (20) configuré pour entraîner un mouvement d'au moins une partie de l'objet portable, un haut-parleur (24) configuré pour sortir des sons, un émetteur de lumière (22) configuré pour émettre de la lumière, ou leur combinaison quelconque.

2. Système interactif selon la revendication 1, dans lequel les instructions sont exécutables par le ou les processeurs pour amener le ou les processeurs à identifier le ou les NFT que possède l'utilisateur par l'intermédiaire d'une communication avec un dispositif utilisateur transporté par l'utilisateur.

3. Système interactif selon la revendication 1, dans lequel l'objet portable (10) est un jouet portable conçu pour être transporté par l'utilisateur.

4. Système interactif selon la revendication 1, dans lequel les instructions sont exécutables par le ou les processeurs pour amener le ou les processeurs à fournir les signaux de commande à l'actionneur (20) pour entraîner le mouvement d'au moins la partie de l'objet portable (10) en fonction du ou des NFT.

5. Système interactif selon la revendication 1, dans lequel les instructions sont exécutables par le ou les processeurs pour amener le ou les processeurs à fournir les signaux de commande au haut-parleur (24) pour sortir les sons en fonction du ou des NFT.

6. Système interactif selon la revendication 1, dans lequel les instructions sont exécutables par le ou les processeurs pour amener le ou les processeurs à fournir les signaux de commande à l'émetteur de lumière (22) pour émettre la lumière en fonction du ou des NFT.

7. Système interactif selon la revendication 1, dans lequel les instructions sont exécutables par le ou les processeurs pour amener le ou les processeurs à donner instruction à une imprimante d'imprimer un accessoire physique pour l'objet portable (10) en fonction du ou des NFT.

8. Système interactif selon la revendication 1, dans lequel les instructions sont exécutables par le ou les processeurs pour amener le ou les processeurs à délivrer en sortie une notification à un dispositif utilisateur transporté par l'utilisateur pour guider l'utilisateur pour qu'il se déplace vers un emplacement où obtenir au moins un NFT supplémentaire.

9. Système interactif selon la revendication 1, dans lequel les instructions sont exécutables par le ou les processeurs pour amener le ou les processeurs à fournir des signaux de commande à un émetteur de lumière d'attraction, à un haut-parleur d'attraction, ou aux deux au sein d'une attraction de parc d'attractions en fonction du ou des NFT.

10. Système interactif selon la revendication 1, dans lequel les instructions sont exécutables par le ou les processeurs pour amener le ou les processeurs à sélectionner l'utilisateur à partir d'une pluralité d'utilisateurs en fonction de réalisations respectives de la pluralité d'utilisateurs avant d'identifier le ou les NFT que possède l'utilisateur, et éventuellement dans lequel l'objet portable (10) comprend un véhicule aérien sans pilote.

11. Système interactif selon la revendication 1, dans lequel les instructions sont exécutables par le ou les processeurs pour amener le ou les processeurs à synchroniser l'objet portable (10) avec un dispositif utilisateur de l'utilisateur lorsque l'objet portable (10) se trouve dans une plage de portée du dispositif utilisateur afin d'identifier ainsi le ou les NFT que possède l'utilisateur.

12. Système interactif selon la revendication 1, dans lequel les instructions sont exécutables par le ou les processeurs pour amener le ou les processeurs à fournir une place de marché de NFT afin de faciliter un transfert du ou des NFT à un autre utilisateur.

13. Système selon la revendication 1, dans lequel les instructions sont exécutables par le ou les processeurs pour amener le ou les processeurs à :
identifier qu'un utilisateur a achevé une expérience ;
en réponse à l'identification de l'achèvement de l'expérience, créer l'expérience comme l'un parmi le ou les NFT pour l'utilisateur ; et
fournir des signaux de commande au ou aux dispositifs de sortie de l'objet portable (10) en fonction du NFT créé.

14. Système interactif selon la revendication 13, dans lequel les instructions sont exécutables par le ou les processeurs pour amener le ou les processeurs à identifier que l'utilisateur a achevé l'expérience après la détection d'une interaction verbale entre l'utilisateur et un élément dans une attraction de parc d'attractions, un geste effectué dans l'attraction de parc d'attractions, ou une interaction de ciblage dans l'attraction de parc d'attractions.

15. Procédé de fonctionnement d'un système interactif pour un parc d'attractions, le procédé comprenant :
l'identification, à l'aide d'un ou plusieurs processeurs, d'un ou plusieurs jetons non fongibles (NFT) que possède un utilisateur ; et
la fourniture, à l'aide du ou des processeurs, de signaux de commande à un ou plusieurs dispositifs de sortie d'un objet portable en fonction du ou des NFT, dans lequel la fourniture des signaux de commande au ou aux dispositifs de sortie comprend :
la fourniture des signaux de commande à un actionneur pour entraîner un mouvement d'au moins une partie de l'objet portable ;
la fourniture des signaux de commande à un haut-parleur pour sortir des sons ;
la fourniture des signaux de commande à un émetteur de lumière pour émettre de la lumière ; ou
leur combinaison quelconque.
